# EUROPEAN PATENT APPLICATION

(11) **EP 0 532 478 A2**
(43) Date of publication of application: **17.03.1993**
(21) Application number: 92830474.0
(22) Date of filing: 10.09.1992
(51) Int. Cl.: B32B 17/10, B29C 39/12, C03C 27/12

(54) **A glass/polymer resin composite article of improved acoustic insulation and process of manufacture thereof**

(30) Priority: 13.09.1991 IT RM910682
(71) Applicant: SOCIETA' ITALIANA VETRO - SIV - S.p.A., I-66050 San Salvo CH (IT)
(72) Inventor: Massarelli, Liberto, I-66054 Vasto CH (IT); Capriotti, Luigi, I-63039 S. Benedetto del Tronto AP (IT)
(74) Representative: Bazzichelli, Alfredo

(57) **Abstract**

A glass/polymer resin composite article with improved properties of acoustic insulation comprises a pair of sheets of glass with an intermediate layer of sound-absorbing polymer resin made from a monomer composition comprising 5 to 50% of an aliphatic polyurethane and 15 to 85% of a mixture of photo polymerizable monomers. The article has the same transparency as glass, it is resistant to breakage and it is adapted to be used as glazing for vehicles and buildings.

## Description

### BACKGROUND OF THE INVENTION

### 1. Field of the Invention

The present invention relates to a glass/polymer resin composite article for use as a transparent, sound absorbent glazing for vehicles and buildings.

The present invention further relates to a process for the manufacture of a glass/resin composite.

Recently, there has been an increase in the need in the field of vehicles of a good level of acoustic insulation in order to improve passenger comfort.

This need has also begun to be felt in the field of building construction, given the notable degree of sound pollution reached in large cities.

As glazed surfaces, both in vehicles and in buildings, are among the main culprits as regards allowing noise to penetrate to the internal environment, particular attention has been given to improving the acoustic insulation ability of glass.

Normally, a sheet of monolithic glass having a thickness of around 3-4 mm has good acoustic insulation properties, which, however, decrease drastically in the field of frequencies from 2500 to 4000 Hz, where an acoustic gap occurs due to the so-called coincidence effect. Further information regarding this particular technical aspect can be gained from the UNI 7170-73 standard.

This effect tends to increase in the case of sound waves hitting the glass at an angle of less than 90°: this is the case for example in the side window of an automobile.

### 2. Description of the Prior Art

Insulating glass is known from the state of the art, formed by two sheets of glass with an air space of a suitable thickness between them, which types of glass have a heat insulating function, and to which an acoustic insulation function is also wrongly ascribed.

These types of glass are not, in fact, capable of providing an adequate acoustic insulation over the entire range of frequencies, while they only succeed to decrease the acoustic gap found in monolithic glass and caused by the so-called coincidence effect.

### SUMMARY OF THE INVENTION

Object of the present invention is therefore a glass/polymer resin composite article of improved acoustic insulation properties formed of two or more sheets of glass disposed in a spaced relationship and of a polymer resin filling the space therebetween, characterized in that said polymer resin is formed from a monomer composition comprising, referred to the total weight of the composition, 5 to 50% by weight of an aliphatic polyurethane, 15 to 85% by weight of a mixture of photo polymerizable monomers selected from the class consisting of acryl and/or vinyl and/or acrylamide and/or epoxyacryl and/or methacryl monomers, and usual polymerization additives, so that said composite article shows good properties of acoustic insulation and resistance to breakage and it has the same transparency as glass.

Further object of the present invention is a process for the manufacture of a composite article characterized in that it comprises the following steps:
- assembling two or more sheets of glass in a spaced relationship so as to form air spaces therebetween no less than 1 mm wide;
- pouring into said spaces a calculated amount of said monomer composition as defined above;
- immersing the article thus formed vertically in a polymerization bath filled with an aqueous solution; and
- performing the polymerization of said monomer composition by ultraviolet irradiation.

According to the present invention, a glass is formed by two sheets of glass of suitable thickness, separated by means of a spacer which also acts as a gasket and aesthetic finishing element, and the space therebetween is filled, in a controlled manner, with a transparent fluid composition. The composition, as well as the additives usually employed for preparation of castable compositions, comprises, referred to the total weight of the composition, 5 to 50% by weight of an aliphatic polyurethane, 15 to 85% by weight of a mixture of photo polymerizable monomers selected from the class consisting of acryl and/or vinyl and/or acrylamide and/or epoxyacryl and/or methacryl monomers, and usual polymerization additives.

The proportion and type of polyurethane and various monomers forming the composition are chosen in such a way that the reaction speed of the mixture is the lowest possible, in order to minimize the exothermic effects of the reaction, to control shrinking of the plastic product during polymerization, to obtain correspondence with the relative vehicle and building construction acceptance standards.

In particular, the amount of multifunctional photo polymerizable monomers must be in percentage by weight, referred to the weight of the monofunctional photo polymerizable monomers, from 0% to 5%, and preferably from 0.5% to 1.5%.

The monomer composition also comprises at least 2% and at most 40% by weight, with respect to the overall weight of the composition, of plastifying agents or mixtures of plastifying agents as well as the normal process additives such as: surfactants, catalysts, photo decomposition inhibitors, colorants, etc.

### DESCRIPTION OF PREFERRED EMBODIMENTS

The following examples of composition are given for illustration:

### EXAMPLE 1

5 g of diisodecyl adipate, 20 g of NVP, 130 g of tert.butyl acrylate, 40 g of 2HEA, 30 g of a bifunctional polyether having a molecular weight of approximately 1000, 5 g of a polyether having a functionality of 2.4; 0.4 g of a photo initiator, 7.2 g of isoforondiisocyanate (IPDI) with 37.7% NCO; 0.4 g of a diacrylate such as neopentylglycole diacrylate (NPGDA), 0.2 g of a catalyst of the type THORCAT 535 produced by THOR CHEMICAL, 2 g of a photo stabilizing agent of the type HALS, 3 g of an adhesion promoting agent are mixed.

After 8 hours' stirring at 40°C, spectrophotometric analysis shows the almost complete disappearance of the characteristic peak of NCO absorption, and formation of the layer can go ahead, by pouring the urethane dispersion in a reactive solvent into the pre-formed space and activating the ultraviolet sensitive component, so as to produce a transparent, sound-absorbing material.

### EXAMPLE 2

2 g of Capa 304 (trifunctional polycaprolactone), 15 g of a polyether mixture known as Lab. A2499 having OH 165 and supplied by Huls, 31 g of a polyether with molecular weight 1000 having OH 112, 15 g of refined castor oil having OH 148 are mixed together with heating.

After degassing under vacuum and heating, 40 g of tributylphosphate, 30 g of diisodecyl adipate, 10 g of n-vinylpirrolidone, 20 g of 2-ethylhexyl acrylate, 1 g of a trifunctional acrylic monomer such as TMPTA, 1.1 g of a suitable catalyst for the polyurethane function and the same amount of a suitable catalyst of ultraviolet polymerization such as DAROCUR 1173 produced by MERCK, 3 g of an ultraviolet stabilizing agent and 0.2 g of a surfactant such as DC 192 are added; at the moment of use 24 g of an IPDI polyadduct having 30% NCO are added and well mixed into the rest of the mixture.

This composition is usable for a period of approximately 20 minutes at room temperature.

The resulting polymer gives a sound-absorbing material with a transparency equivalent to that required for glazing in vehicles, in particular automobiles.

### EXAMPLE 3

In a container are mixed 56 g of NVP, 40 g of TIFA (tetrahydrofurfuryl acrylate), 44 g of 2-ethylhexyl acrylate, 4.8 g of Darocur 1173, 3.9 g of Tinuvin 765, 10 g of a polyether having a molecular weight of approximately 800 and functionality 2.4, 0.1 g of dibutyldilauryltin, 4 g of isocyanate polyadduct known as B2499 produced by the company Huls, 8.6 g of diisodecyl adipate.

The thus formed preparation allows working for approximately 2 hours without appreciable physical modifications in the finished product.

In this case also it is possible to obtain excellent transparency, which remains even after ultraviolet aging for 100 hours.

### EXAMPLE 4

The following are taken: 0.3 g of neopentylglycol diacrylate, 52 g of NVP, 44 g of 2HEA, 68 g of TIFA, 4.8 g of ultraviolet catalyst, 4 g of a stabilizer for the photo decomposition process, 0.08 g of an azocompound as a thermal catalyst for the acrylvinyl component, 25 g of a polyether polyol with linear chain and molecular weight of approximately 1000, 7.5 g of an isocyanate compound containing 30% NCO and 0.07 g of an organometallic catalyst dissolved in 5 g of a plastifying agent such as dioctylphtalate (DOP).

The mixture is stirred for 2-5 minutes and poured into the space formed between two sheets of glass and made to undergo UV polymerization for a period of time variable from 20 to 60 seconds.

The plastic material obtained has excellent sound-absorbing properties and high transparency.

### EXAMPLE 5

The following are taken: 24 g of 2HEA, 10 g of N-(1.5-DIMETHYL-1-ETHYL)HEXYL-ACRYLAMIDE produced by the company CHEMIE LINZ, 1 g of photo initiator (Darocur 1173), 6 g of a polyether polyole with function 2.4 and an OH number 165, 2.4 g of an aliphatic isocyanate derived from IPDI with an NCO content equivalent to 30%, 1 g of a photo stabilizing agent and 0.1 g of a mercury compound as a catalyst for the polyurethane part, dissolved in 5 g of DOP plastifying agent.

The resulting compound, after homogenization, is poured into the space formed between two sheets of glass and made to undergo UV irradiation.

After the required irradiation time, the finished piece is extracted and tested by dropping a metal ball weighing 227 g from a height of 5 m. The result of the test is excellent, also showing good antibreaking properties.

An illustrative description will now be given of a preferred process of application of the polymer mixture object of the present invention for the manufacture of a sound-absorbing glass/resin composite.

A pair of sheets of glass are used to form a mould and washed, dried and assembled in such a way as to leave an air space of not less than 1 mm therebetween.

A suitable apparatus provides for sealing of the edges of the pair, leaving a small aperture which serves as the inlet for the polymer mixture.

The sheets of glass, filled with the above illustrated monomer composition are immersed vertically in a polymerization bath made of transparent material, preferably glass. The bath comprises aqueous solution with the same controlled density as the monomer composition employed. The bath is capable of reacting to the hydraulic pressure of the monomer composition and it avoids any loss of parallelism of the surfaces of the two sheets of glass.

In this way it is possible to ensure an optimum optical behaviour of the resulting glass/resin composite, with elimination of visual faults.

In the aqueous solution isopropyl alcohol is preferably used. The solution also controls that heat produced by the reaction has no interference in the polymerization process.

Outside the polymerization bath, a series of ultraviolet lamps is placed, which emit light in the range from 300 to 450 nm (essentially centered around 400 nm).

The ultraviolet irradiation power is between 0.05 mW/cm2 and 10 mW/cm2.

A suitable refrigerating system keeps the temperature of the aqueous solution within a range from 10°C and 50°C (preferably around 15° Centigrade).

When the pressure heads of the liquids, the monomer composition inside and the aqueous solution outside, have reached the same level, ultraviolet irradiation treatment begins.

After a suitable period of time, which varies from 10 to 60 seconds, the piece is extracted from the bath with the mixture practically solidified and, if necessary, thermal stabilization is performed at 80°C for approximately one hour.

The characteristics of the invention will be more clearly seen when considering the following example of embodiment.

### EXAMPLE 6

Two sheets of glass, each having a thickness of 2.1 mm, are washed and dried and assembled using known methods, leaving an air space of 2.2 mm and also leaving open a pouring aperture.

Into the space between the sheets of glass, a calculated amount of composition is poured, prepared according to the formula given in example 2 above, to which a certain additional amount is added to compensate for shrinking during polymerization.

The glass/resin composite thus formed is immersed in a polymerization bath containing isopropyl alcohol and water, until the level of the internal mixture and the level of the external solution coincide.

Ultraviolet irradiation is performed, preferably centered around a wavelength of 400 nm at a power of 3.2 mW/cm2 and for a period of 35 seconds.

The aqueous solution is maintained, by means of suitable refrigerating systems, at a temperature of 20°C for the time required for polymerization.

On completion of ultraviolet irradiation, the glass/resin composite, now solid, is extracted from the bath and made to undergo thermal stabilization lasting for 20 minutes and at a temperature of 60°C.

### EXAMPLE 7

The same process is then carried out using a cell formed by two sheets of glass each 3.1 mm thick and with an air space of 3 mm.

Results of acoustic tests.

In the following table are given the values of acoustic insulation capacity R1 (according to example 6) and R2 (according to example 7) of the two glass/resin composite, respectively with overall thicknesses of 6.3 mm and 9.2 mm., obtained according to the present invention, and the sound insulating capacity value R3 (comparison) of an insulating glass formed by two sheets of glass each 3 mm thick, separated by an air space having a thickness of 3mm.

Measurement of the acoustic insulation capacities R1, R2 and R3 was performed according to the indications of specifications ISO 140/III and UNI 8270/3.

Measurement of the average acoustic insulation capacity, indicated respectively with Rw1, Rw2 and Rw3, was performed according to specifications ISO 717/1 and UNI 8270/3 at 500 Hz.

The results are given in the following table.

| FREQUENCY IN Hz | R1 | R2 | R3 |
|---|---|---|---|
| 500 | 30.9 | 32.9 | 21.5 |
| 630 | 31.9 | 34 | 22.4 |
| 800 | 32.4 | 36.3 | 20.9 |
| 1000 | 35.1 | 37.6 | 26 |
| 1250 | 36 | 38.8 | 26.6 |
| 1600 | 37.6 | 39.9 | 29.2 |
| 2000 | 37.9 | 41 | 31.3 |
| 2500 | 38.9 | 41.4 | 33.2 |
| 3150 | 39.8 | 39.5 | 33.3 |
| 4000 | 40.1 | 46.5 | 32.6 |

The average acoustic insulation capacities result to be respectively Rw1=34 decibels, Rw2=37 decibels and Rw3=30 decibels.

The improvement of the acoustic insulation capacity over the whole range of frequencies is therefore evident in insulating glass provided with a polymer resin according to the present invention, even when the thickness of the glass itself and the width of the gap are reduced (Rw1).

Further technical solutions, such as those of using a thicker sheet of glass on the side nearest the source of noise and a thinner sheet of glass on the opposite side and/or of providing the sheets of glass with a film deposited either physically or chemically or holographically and/or of adding pigments to the polymer mixture in order to obtain suitable colouring, are all variations which fall within the scope of the present invention.

Furthermore, more than two sheets of glass, particularly three sheets, can be used in the composite article of the present invention.

Use of the monomer composition according to the present invention in the process for manufacture of sound insulating glass also gives a number of other advantages.

The composition has a good level of fluidity, which renders filling of the polymerization cell easy and rapid. It also provides the pieces with adequate acoustic insulation properties, while at the same time conserving the optical properties required by safety regulations for vehicles, and in particular reducing the defects of vision which are to be found in insulating glass with an air gap. It has excellent properties of resistance to aging, which is a critical condition in the case of the glass being installed in vehicles having an average life of ten years, or even of being used for building construction, where the average life-span is even higher.

As regards the finished product thus obtained, the mechanical strength of the mixture polymerized and treated according to the process object of the present invention allow the use of any kind of glass, even untempered, curved glass, as the product is easily able to pass the tests required for homologation for resistance to breaking according to the European safety standard ECE 43.

Finally, as regards the designing of a product having the capability of a sound insulating glass, a composition according to the present invention and the relative manufacturing process allow a wide range of combinations of thickness for two or more sheets of glass and the internal resin material, without any particular limitation either on the part of the glass or on the part of the plastic, all forming alternative embodiments which fall within the scope of the present invention.

## Claims

1. A glass/polymer resin composite article of improved acoustic insulation properties formed of two or more sheets of glass disposed in a spaced relationship and of a polymer resin filling the space therebetween, characterized in that said polymer resin is formed from a monomer composition comprising, referred to the total weight of the composition, 5 to 50% by weight of an aliphatic polyurethane, 15 to 85% by weight of a mixture of photo polymerizable monomers selected from the class consisting of acryl and/or vinyl and/or acrylamide and/or epoxyacryl and/or methacryl monomers, and usual polymerization additives, so that said composite article shows good properties of acoustic insulation and resistance to breakage and it has the same transparency as glass.

2. The article according to claim 1, in which the weight ratio of said photo polymerisable monomers to the polyfunctional photo polymerizable monomer/s in said mixture is 0 to 5% by weight referred to the weight of the monofunctional photo polymerizable monomer/s.

3. The article according to claim 2, in which said weight ratio is 0.5 to 1.5% by weight.

4. The article according to any of the preceding claims, in which said composition further comprises a plastifying agent or a mixture of plastifying agents in a weight ratio of 2 to 40% by weight referred to the overall weight of the composition.

5. An article according to claim 1, having an acoustic insulation capacity of 34 decibels, in which said sheets of glass have a thickness of 2.1 mm each and said polymer resin has a thickness of 2.2 mm.

6. An article according to claim 1, having an acoustic insulation capacity of 37 decibels, in which said sheets of glass have a thickness of 3.1 mm each and said polymer resin has a thickness of 3 mm.

7. A process for the manufacture of a composite article as defined in claims 1 to 4, characterized in that it comprises the following steps:
- assembling two or more sheets of glass in a spaced relationship so as to form air spaces therebetween no less than 1 mm wide;
- pouring into said spaces a calculated amount of said monomer composition as defined in claims 1 to 4;
- immersing the article thus formed vertically in a polymerization bath filled with an aqueous solution; and
- performing the polymerization of said monomer composition by ultraviolet irradiation.

8. Process according to claim 7, in which the temperature of the aqueous solution contained in the polymerization bath is kept within a range from 10° to 50° Centigrade.

9. Process according to claim 7, in which said ultraviolet irradiation is performed using a power of 0.05 to 10 mW/cm2.

10. Process according to claim 5, in which said aqueous solution is formed of a liquid having a controlled density identical to the density of the monomer composition used to fill the air spaces formed by the sheets of glass.

11. A process according to claim 10, in which said liquid is a solution of isopropyl alcohol in water.
